# EUROPÄISCHE PATENTSCHRIFT

(11) **EP 1 988 318 B1**
(45) Veröffentlichungstag und Bekanntmachung des Hinweises auf die Patenterteilung: **27.10.2010**
(21) Anmeldenummer: 08006025.4
(22) Anmeldetag: 28.03.2008
(51) Int. Cl.: F16L 5/04

(54) **Wanddurchführung**
Wall bushing
Passage de mur

(30) Priorität: 04.05.2007 DE 202007006414 U
(43) Veröffentlichungstag der Anmeldung: 05.11.2008
(73) Patentinhaber: Joseph Raab GmbH & Cie. KG, 56566 Neuwied (DE)
(72) Erfinder: Böhringer, Dirk, 56329 St. Goar (DE)
(74) Vertreter: Tiesmeyer, Johannes

(56) Entgegenhaltungen:
- GB-A- 2 077 382

## Beschreibung

Die vorliegende Erfindung betrifft eine Wanddurchführung zur thermisch isolierenden Durchführung eines Rohrs, etwa Abgasrohrs, durch eine Gebäudewand längs einer Durchführungsachse, mit einer ersten Einfassung aus feuerfestem Material, welche sich längs der Durchführungsachse erstreckt und einen Durchtrittsraum zur Aufnahme des Rohrs umgibt, und mit einer zweiten Einfassung aus feuerfestem Material, welche die erste Einfassung zumindest längs eines Abschnitts der Durchführungsachse radial außen umgibt.

Eine derartige Wanddurchführung ist beispielsweise unter dem Produktnamen Ventipipe ® der Firma ZLT Lüftungs- und Brandschutztechnik GmbH in Oelsnitz bekannt. Bei der bekannten Wanddurchführung liegen die radial äußere und die radial innere Einfassung aneinander an und sind teleskopartig längs der Durchführungsachse relativ zueinander verlagerbar, um die bekannte Wanddurchführung auf unterschiedliche Wanddicken einzustellen.

Aus GB 2 077 382 A ist eine gattungsbildende Wanddurchführung bekannt, die alle Merkmale des Oberbegriffs des Anspruchs 1 erfasst.

Die bekannten Wanddurchführungen dienen in der Regel dazu, ein mit heißen Abgasen durchströmtes Rohr, etwa das Abgasrohr einer Heizungsanlage in Gebäuden, durch eine Außenwand hindurchzuführen. Dabei ist es Aufgabe der Wanddurchführung, das mitunter sehr heiße Rohr thermisch von der Wand zu isolieren, um eine Entzündungsgefahr von Baumaterial in der vom Rohr durchsetzten Wand durch die thermische Energie des Rohrs auszuschließen.

Nachteilig an den bekannten Wanddurchführungen ist, dass die radial innere erste Einfassung und die an dieser anliegende radial äußere zweite Einfassung auf Grund ihres flächigen Berührkontakts in radialer Richtung wie eine einzige Einfassung mit entsprechender radialer Dicke wirken, wobei je nach Dicke der vom Rohr durchsetzten Wand und dem hierdurch erforderlichen Relativanordnungszustand der beiden relativ zueinander verlagerbaren Einfassungen axiale Abschnitte vorhanden sein können, in denen in radialer Richtung lediglich eine Einfassung isolierend wirkt. Dadurch kann die thermische Isolationswirkung ungenügend sein, bzw. muss die bekannte Wanddurchführung bei sicher ausreichender Isolierung in radialer Richtung sehr dick sein.

Gerade beim Ausschalten von Gebäudeheizungsanlagen kann es jedoch zu einem erheblichen Nachheizen im Abgasrohr kommen, so dass bei den bekannten Wanddurchführungen die baurechtlich vorgeschriebene Maximaltemperatur an ihrem radial äußeren, zur durchsetzten Wand hin weisenden und mit dieser in Kontakt stehenden Außenmantel überschritten werden kann.

Es ist daher Aufgabe der vorliegenden Erfindung, eine gattungsgemäße Wanddurchführung anzugeben, bei welcher auf möglichst kleinem Bauraum eine möglichst gute thermische Isolierung bereitgestellt werden kann.

Die genannte Aufgabe wird erfindungsgemäß gelöst durch eine Wanddurchführung der eingangs genannten Art, bei welcher radial zwischen der ersten und der zweiten Einfassung ein sowohl längs der Durchführungsachse als auch in Umfangsrichtung um die Durchführungsachse zumindest abschnittsweise sich erstreckender und in wenigstens einer axialen Richtung offener Luftspalt vorgesehen ist.

Die Durchführungsachse definiert die axiale Richtung, längs welcher eine Gebäudewand durchsetzt wird. In der Regel wird die Durchführungsachse orthogonal zu einer Gebäudewand orientiert sein. Dann jedoch, wenn die Wanddurchführung als Dachdurchführung eingesetzt wird, kann die Durchführungsachse auch unter einem vom rechten Winkel abweichenden Winkel auf die durchsetzte Wand treffen. Im Sinne der vorliegenden Anmeldung ist daher auch ein Dach oder eine Zimmerdecke als Gebäudewand zu verstehen.

Die radial innere erste Einfassung aus feuerfestem Material umgibt längs der Durchführungsachse einen Durchtrittsraum, welcher im fertig montierten Zustand der Wanddurchführung von dem Rohr durchsetzt ist.

Dadurch, dass die erste und die zweite Einfassung mit einem radial zwischen ihnen liegenden Luftspalt vorgesehen sind, kann die thermische Isolationswirkung der erfindungsgemäßen Wanddurchführung in radialer Richtung dort, wo ein Luftspalt vorhanden ist, erheblich erhöht werden. Dies liegt an den sehr schlechten Wärmeleiteigenschaften von Gasen. Aus diesem Grunde kann in radialer Richtung von der radial inneren Innenwandfläche der ersten Einfassung bis zur radial äußeren Außenwandfläche der zweiten Einfassung auf kurzer Distanz ein hohes Temperaturgefälle erreicht werden.

Die radiale Richtung im Sinne dieser Anmeldung ist ausgehend von der Durchführungsachse definiert.

Dadurch, dass der Luftspalt in axialer Richtung in wenigstens einer Richtung offen ist, kann die Luft im Luftspalt konvektiv ausgetauscht werden, was die thermische Isolationswirkung weiter erhöht. Mit "offen" im Sinne der vorliegenden Anmeldung ist die grundsätzliche Möglichkeit bezeichnet, dass ein Luftaustausch zwischen der Luft in dem Luftspalt und der Außenumgebung stattfinden kann. Dies kann durch eine oder mehrere kleine Öffnungen oder/und durch einen länglichen Schlitz ermöglicht sein. Besonders bevorzugt ist die Offenheit des Luftspalts in wenigstens einer axialen Richtung durch eine um die Durchführungsachse umlaufende, geschlossene, d.h. unterbrechungsfreie Ringöffnung hergestellt. Diese Ringöffnung kann einen runden oder polygonalen Querschnitt aufweisen. Die letztgenannte Ausgestaltungsform stellt einen Luftspalt mit möglichst großer Öffnungsfläche bereit, so dass der Luftaustausch zwischen der Luft im Luftspalt und der Außenumgebung besonders einfach und gründlich erfolgen kann. Dies gewährleistet die gute thermische Isolation der erfindungsgemäßen Wanddurchführung.

Da die von dem Rohr durchsetzten Wände in der Regel homogen aufgebaut sind, ist es vorteilhaft, an dem radial äußeren Außenmantel der Wanddurchführung in Umfangsrichtung eine möglichst homogene Temperatur zu erreichen. Dies kann vorteilhafterweise dadurch erhalten werden, dass die erste und die zweite Einfassung koaxial angeordnet sind.

Für eine gleichmäßige thermische Isolationswirkung in axialer Richtung ist es vorteilhaft, wenn der Luftspalt sich in axialer Richtung im Wesentlichen über die gesamte axiale Länge der Wanddurchführung erstreckt. Dadurch kann erreicht werden, dass die Außenmanteltemperatur der Wanddurchführung im Wesentlichen längs der gesamten Wanddurchsetzungsstrecke unter der baurechtlich geforderten Maximaltemperatur bleibt, insbesondere bei den oben genannten Aufheizvorgängen durch Stauwärme nach dem Abschalten einer mit dem durchsetzenden Rohr verbundenen Heizung.

Für die oben genannte vorteilhafte niedrige Temperatur des gesamten Außenumfangs der Wanddurchführung ist es außerdem vorteilhaft, wenn der Luftspalt ein in Umfangsrichtung geschlossener, d.h. nicht unterbrochener Ringspalt ist.

Zur Abdichtung der Wandöffnung, in welche die Wanddurchführung gemäß der vorliegenden Anmeldung eingesetzt ist, gegenüber der Außenumgebung, ist es vorteilhaft, wenn die erste und die zweite Einfassung durch eine Verbindungsplatte miteinander verbunden sind, mit welcher die Durchführungsachse einen Winkel einschließt. Dies bedeutet, dass die gedachte Durchführungsachse nicht in der Ebene der Verbindungsplatte bzw. allgemein nicht in der Verbindungsplatte liegt. Die Wanddurchführung kann dann derart in die Wandöffnung eingesetzt werden, dass die Verbindungsplatte die Wandöffnung bis auf eine Durchtrittsöffnung für das Rohr im Wesentlichen verschließt.

Vorzugsweise ist dieser Winkel dann ein rechter Winkel, wenn die Wanddurchführung in im Wesentlichen vertikal verlaufenden Gebäudewänden oder im Wesentlichen horizontal verlaufenden Gebäudedecken eingesetzt werden soll. Dann jedoch, wenn die Wanddurchführung gemäß der vorliegenden Anmeldung als Dachdurchführung ein im Vergleich zur Schwerkraftwirkungsrichtung geneigtes Dach durchsetzen soll, kann der Winkel, den die Durchführungsachse mit der Verbindungsplatte einschließt, vom rechten Winkel abweichen, damit die entsprechende Dachöffnung von der Verbindungsplatte zuverlässig verschlossen werden kann.

Auch dann, wenn ein durch eine Wand hindurch zu führendes Rohr diese Wand nicht unter einem rechten Winkel durchsetzen soll, kann vorgesehen sein, dass die Verbindungsplatte derart orientiert ist, dass die Durchführungsachse mit ihr den geplanten Durchsetzungswinkel einschließt.

Besonders vorteilhaft ist die Verbindungsplatte an einem axialen Längsende der ersten und der zweiten Einfassung vorgesehen, da dann die Wanddurchführung bündig mit einer Seite der vom Rohr zu durchsetzenden Gebäudewand eingebaut werden kann. Vorteilhafterweise wird die Wanddurchführung in der Regel so in eine Wandöffnung eingesetzt, dass die ins Gebäudeinnere weisende Fläche der Verbindungsplatte bündig an die Wandinnenfläche anschließt, um eine möglichst glatte Innenwand zu erhalten.

Durch die Anbringung der Wanddurchführung derart, dass die Verbindungsplatte bündig an die Innenseite einer vom Rohr zu durchsetzenden Gebäudewand anschließt, kann außerdem eine Hinterlüftung von außen und damit ein kontinuierlicher konvektiver Wärmeabtransport durch Luftbewegung in der Außenumgebung sichergestellt sein.

Durch die Verwendung der zuvor genannten Verbindungsplatte kann eine Wanddurchführung der vorliegenden Erfindung die oben beschriebenen sehr guten thermischen Isolationseigenschaften bei effizienter Bauraumausnutzung aufweisen. Gleichzeitig kann ein mit einer solchen Wanddurchführung versehenes Gebäude den sogenannten "Blower-Door-Test" bestehen. In diesem Falle ist der Luftspalt in axialer Richtung in genau eine Richtung offen. Es soll bei weniger bevorzugten Ausführungsformen jedoch nicht ausgeschlossen sein, dass der Luftspalt in axialer Richtung in beiden Richtungen offen ist, so dass der Luftspalt in axialer Richtung von Luft durchströmt werden kann.

Zur Verbesserung der Stabilität der Wanddurchführung sowie zur Sicherstellung einer guten Einfassung des durchsetzenden Rohrs kann die Wanddurchführung eine erste Deckelplatte aufweisen, welche an einem axialen Längsende der ersten Einfassung angeordnet ist.

Die Deckelplatte reicht vorteilhafterweise von der ersten Einfassung ausgehend nach radial innen, wobei sie einen an das durchsetzende Rohr angepassten Ausschnitt aufweist. Der Ausschnitt ist derart gewählt, dass das durchsetzende Rohr im Einbauzustand die Deckelplatte mit möglichst geringem Spalt durchsetzt.

Alternativ oder zusätzlich kann am axialen Längsende der zweiten Einfassung eine zweite Deckelplatte vorgesehen sein. Diese kann wie die erste Deckelplatte zur Verbesserung der Stabilität der Wanddurchführung und zum verbesserten Schutz doppelwandig ausgeführter Einfassungen dienen.

Vorteilhafterweise sind die erste oder/und die zweite Deckelplatte derart vorgesehen, dass der radial zwischen der ersten und der zweiten Einfassung vorgesehene Luftspalt sich in axialer Richtung auch zwischen den Deckelplatten fortsetzt, so dass die oben erwähnte Hinterlüftung und der kontinuierliche Wärmeabtransport an die Umgebung gewährleistet sind.

Da die durchsetzten Gebäudewände in der Regel eben ausgebildet sind und feuerfestes Material häufig plattenförmig angeboten wird, ist aus Gründen einer einfachen Fertigung bevorzugt, wenn die Verbindungsplatte und die erste oder/und die zweite Deckelplatte eben sind.

Bei Wanddurchführungen, welche für einen Einsatz in im Wesentlichen vertikal oder/und horizontal verlaufenden Gebäudewänden vorgesehen sind, sind die Verbindungsplatte und die erste oder/und die zweite Deckelplatte vorzugsweise parallel angeordnet, wobei besonders bevorzugt die Wanddurchführung in ihrer axialen Länge derart bemessen ist, dass der Abstand der axial jeweils von der Wanddurchführung weg weisenden Außenflächen von Verbindungsplatte und Deckelplatte(n) der Dicke der durchsetzten Wand entspricht.

Dann jedoch, wenn die Wanddurchführung als Dachdurchführung vorgesehen ist, ist bevorzugt, dass die Verbindungsplatte und die erste oder/und die zweite Deckelplatte einen Winkel zwischen sich einschließen, wobei besonders bevorzugt im Einbauzustand die in axialer Richtung von der Wanddurchführung weg weisende Seite der Verbindungsplatte bündig mit der Dachinnenfläche angeordnet ist, während die erste und die zweite Einfassung an der Dachaußenseite über die Dachfläche vorstehen. Dadurch kann zum einen vermieden werden, dass an der Dachschräge ablaufendes Regen- oder Schmelzwasser in den Luftspalt einfließt. Zum anderen kann die Dachdurchführung optisch kaminähnlich ausgestaltet sein, so dass die Wanddurchführung Kundenwünschen entsprechend optisch ansprechend ausgestaltet werden kann. Vorzugsweise ist die erste oder/und die zweite Deckelplatte, sofern vorhanden, dann im Einbauzustand bodenparallel verlaufend vorgesehen.

Aus fertigungstechnischer Sicht vorteilhaft werden im Wesentlichen ebene Platten aus feuerfestem Material zur Herstellung der Wanddurchführung verwendet. Diese können einfach zugeschnitten und miteinander verbunden werden. Sowohl die erste als auch die zweite Einfassung, sowie die Verbindungsplatte und die Deckelplatte(n) können aus feuerfesten Silikatfaserplatten einfach und kostengünstig hergestellt werden. In diesem bevorzugten Falle weist die erste oder/und die zweite Einfassung bei Betrachtung längs der Durchführungsachse einen polygonalen, bevorzugt rechteckigen, besonders bevorzugt quadratischen Querschnitt auf. Es soll jedoch nicht ausgeschlossen sein, dass auch Rohre mit kreisrundem oder ovalem Querschnitt als Ausgangsmaterial für die erste und die zweite Einfassung verwendet werden.

Die vorliegende Erfindung wird im Folgenden anhand von in den Figuren dargestellten Ausführungsbeispielen näher beschrieben werden. Es stellt dar:
- Fig. 1: eine Querschnittsansicht einer erfindungsgemäßen Wanddurchführung auf die Schnittfläche gemäß der in der Verbindungsplatte der Wanddurchführung liegenden Schnittebene I-I von Fig. 2,
- Fig. 2: eine Längsschnittansicht der erfindungsgemäßen Wanddurchführung von Fig. 1 längs der Schnittebene II-II von Fig. 1,
- Fig. 3: eine Querschnittsansicht gemäß einer in Deckelplatten der erfindungsgemäßen Wanddurchführung der Figuren 1 und 2 liegenden Schnittebene III-III von Fig. 2,
- Fig. 4: ein erstes Einsatzbeispiel erfindungsgemäßer Wanddurchführungen als Deckendurchführung und Dachdurchführung, sowie
- Fig. 5: ein zweites Einsatzbeispiel einer erfindungsgemäßen Wanddurchführung.

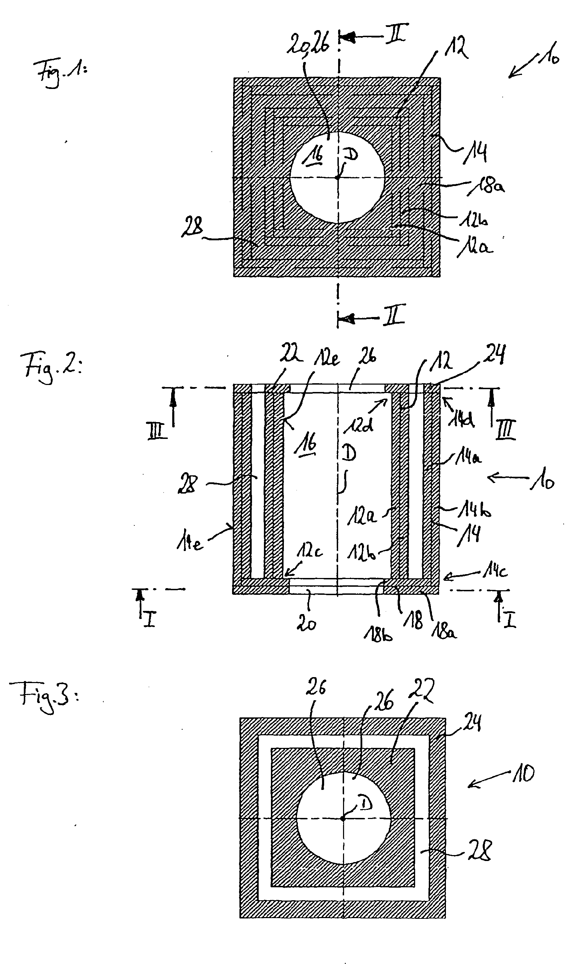

In den Figuren 1 bis 3 ist eine erfindungsgemäße Wanddurchführung allgemein mit 10 bezeichnet.

Die Wanddurchführung 10 ist aus einzelnen ebenen Silikatfaserplatten zusammengebaut. Diese werden im einzelnen weiter unten näher bezeichnet. Beispielsweise können hierfür Silikatfaserplatten der Firma Promat verwendet werden.

Der Aufbau der erfindungsgemäßen Wanddurchführung 10 aus einzelnen ebenen Silikatfaserplatten hat den Vorteil, dass die kommerziell erhältlichen, in der Regel porösen Silikatfaserplatten lediglich auf Maß zugeschnitten werden müssen und dann miteinander zu einer Wanddurchführung gewöhnlicher Größe verbunden werden können.

Da der Aufbau der Wanddurchführung 10 am besten in Fig. 2 zu erkennen ist, wird die Wanddurchführung im Wesentlichen anhand von Fig. 2 beschrieben werden. Die dort beschriebenen Bauteile der Wanddurchführung 10 sind jedoch ohne weiteres in den Figuren 1 und 3 zu erkennen.

Die Wanddurchführung 10 umfasst eine erste Einfassung 12 und eine zweite Einfassung 14. Die beiden Einfassungen 12 und 14 verlaufen im Wesentlichen koaxial zu einer Durchführungsachse D, längs welcher die Wanddurchführung 10 im Einbauzustand von einem in den Figuren 1 bis 3 nicht dargestellten Rohr, wie etwa einem Abgasrohr, durchsetzt wird. Die erste Einfassung 12 definiert und umgibt dabei einen längs der Durchführungsachse D verlaufenden Durchtrittsraum 16, in welchem ein Abschnitt des die Wanddurchführung 10 durchsetzenden Rohrs im Einbauzustand aufgenommen ist.

Die erste Einfassung 12 ist doppelwandig, d.h. durch zwei Fläche-an-Fläche miteinander verbundenen Silikatfaserplatten ausgeführt. Stellvertretend für die acht (s. Fig. 1) die erste Einfassung 12 bildenden Silikatfaserplatten sind in den Figuren 1 und 2 die Silikatfaserplatten 12a und 12b mit Bezugszeichen versehen.

In analoger Bauweise ist auch die zweite Einfassung 14 doppelwandig ausgeführt. Hier sind stellvertretend die Silikatfaserplatten 14a und 14b mit Bezugszeichen versehen.

Sofern in dieser Anmeldung von einer axialen Richtung die Rede ist, so ist damit eine längs der Durchführungsachse D verlaufende Richtung gemeint.

An ihrem einen axialen Längsende 12c bzw. 14c sind die Einfassungen 12 und 14 mit einer ebenfalls doppelwandig ausgeführten Verbindungsplatte 18 verbunden. Die Verbindungsplatte 18 ist gebildet aus den Silikatfaserplatten 18a und 18b, wobei die Schnittebene I-I durch die Silikatfaserplatte 18a verläuft.

Die Verbindungsplatte 18, welche die erste Einfassung 12 mit der zweiten Einfassung 14 verbindet, weist einen Durchtrittsausschnitt 20 auf, welcher in seinem Durchmesser derart bemessen ist, dass er mit geringem Spiel das die Verbindungsplatte 18 im Einbauzustand durchsetzende Rohr umgibt. Durch dieses geringe Spiel soll dem Rohr eine möglichst ungehinderte thermische Ausdehnung über seinen erwarteten Temperaturbereich im Betrieb ermöglicht werden.

An ihren anderen Längsenden 12d bzw. 14d weisen die Einfassungen 12 bzw. 14 jeweils eine Deckelplatte auf. Dabei sind die Deckelplatte der ersten Einfassung 12 mit 22 und die Deckelplatte der zweiten Einfassung 14 mit 24 bezeichnet.

Die Deckelplatten 22 und 24 decken wie schon die Verbindungsplatte 18 die Verbindungslängsfugen der die erste bzw. die zweite doppelwandige Einfassung bildenden Silikatfaserplatten ab. Dadurch wird das Eindringen von Wasser oder Schmutz in die Verbindungsfugen verhindert oder zumindest erschwert.

Auch die Deckelplatte 22 der ersten Einfassung 12 weist eine Durchtrittsausnehmung 26 auf, welche in ihren Abmessungen im Wesentlichen der Durchtrittsausnehmung 20 der Verbindungsplatte 18 entspricht.

Die Einfassungen 12 und 14 sind derart angeordnet, dass in radialer Richtung ausgehend von der Durchführungsachse D zwischen ihnen ein Luftspalt 28 belassen ist.

Der Luftspalt 28 erstreckt sich sowohl in axialer Richtung längs der Durchführungsachse D wie auch in Umfangsrichtung um die Durchführungsachse D. Der Luftspalt 28 erstreckt sich im Sinne der vorliegenden Anmeldung im Wesentlichen über die gesamte axiale Länge der Wanddurchführung 10. Es handelt sich bei dem bevorzugten Ausführungsbeispiel der Figuren 1 bis 3 um einen in Umfangsrichtung unterbrechungsfrei umlaufenden Ringspalt mit quadratischem Querschnitt. Der Ringspalt 28 ist außerdem an dem der Verbindungsplatte 18 entgegensetzten Längsende der Wanddurchführung 10 in axialer Richtung offen, so dass von der Öffnungsseite her eine Hinterlüftung der Wanddurchführung und damit ein konvektiver Wärmeabtransport erfolgen kann.

Bevorzugt wird die Wanddurchführung 10 dann, wenn sie in einer Gebäudeaußenwand angeordnet werden soll, derart eingebaut, dass die Verbindungsplatte 18 näher am Innenraum des betreffenden Gebäudes gelegen ist und der Luftspalt 28 zur Außenumgebung hin offen ist. Dadurch kann sichergestellt werden, dass die üblicherweise herrschende Luftbewegung in der Außenumgebung für eine ausreichende Hinterlüftung sorgt. Dadurch wird Wärme in dem Luftspalt 28 zwischen der ersten und der zweiten Einfassung zur Außenumgebung hin abgegeben. Die Folge ist eine von der Innenwand 12e der ersten Einfassung 12 bis zur Außenwand 14e der zweiten Einfassung 14 gemessene hervorragende Wärmedurchgangszahl bei gleichzeitig kleinem Gesamtabstand der beiden Flächen 12e und 14e.

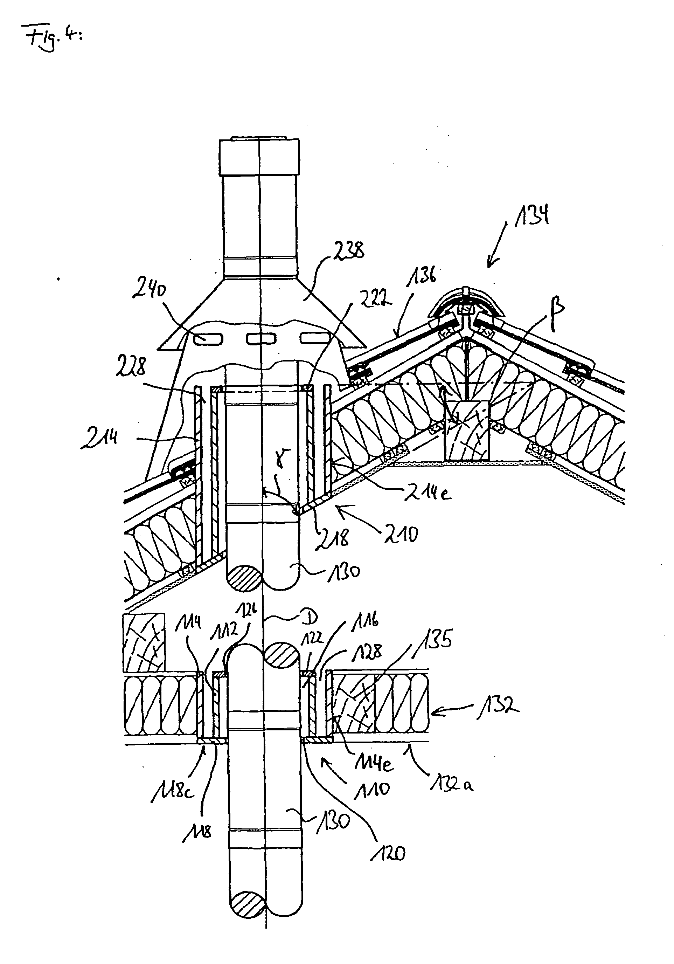

In Fig. 4 sind zwei Ausführungsbeispiele erfindungsgemäßer Wanddurchführungen gezeigt.

In Fig. 4 ist die untere Wanddurchführung sowie Ihre Bauteile mit gleichen Bezugszeichen versehen wie die Wanddurchführung der Figuren 1 bis 3, jedoch erhöht um die Zahl 100.

Die in Fig. 4 obere Wanddurchführung ist ebenfalls mit gleichen Bezugszeichen versehen wie die Wanddurchführung der Figuren 1 bis 3, jedoch erhöht um die Zahl 200. Die in der Fig. 4 dargestellten Wanddurchführungen werden nur insoweit beschrieben, als sie sich von der Wanddurchführung der Figuren 1 bis 3 unterscheiden. Im Übrigen wird ausdrücklich auf die Beschreibung der Figuren 1 bis 3 verwiesen.

In Fig. 4 ist ein Abgasrohr einer Heizanlage mit 130 bezeichnet. Das Abgasrohr besteht aus mehreren Längssegmenten, die zu einem zusammenhängenden Abgaskanal verbunden sind. Das Abgasrohr 130 ist an sich bekannt.

Das Abgasrohr 130 ist durch eine Wanddurchführung 110 durch eine Decke 132 eines Gebäudes 134 hindurch geführt. Die von der Wanddurchführung 110 weg weisende Außenfläche 118c der Verbindungsplatte 118 ist bündig mit der zum Erdboden weisenden Deckenfläche 132a in der Decke 132 angeordnet. Dadurch kann warme Luft aus dem Luftspalt 128 nach oben entweichen, da Luft mit zunehmender Temperatur eine geringer werdende Dichte aufweist. Somit unterstützt die in Fig. 4 gezeigte Anordnung der Wanddurchführung 110 als Deckendurchführung die Hinterlüftung der Einfassungen 112 und 114 und trägt somit zu der sehr guten thermischen Isolierung der dargestellten Wanddurchführung 110 bei. Außerdem wird so eine möglichst glatte Deckenfläche 132a erhalten.

Bei der Wanddurchführung 110 sind die Einfassungen 112 und 114 sowie die Verbindungsplatte 118 lediglich einwandig ausgeführt. Daher ist die zweite, radial äußere Einfassung 114 nicht mit einer Deckelplatte versehen. Lediglich die innere, erste Einfassung 112 weist eine Deckelplatte 122 auf. Die äußere Einfassung 114 ist um die Dicke der Deckelplatte 122 länger ausgeführt als die innere Einfassung 112, so dass beide Längsenden der Wanddurchführung 110 im Wesentlichen durch parallele Ebenen eingehüllt sind.

In der Querschnittsansicht von Fig. 4 ist zu erkennen, wie das Rohr 130 in den Durchtrittsausschnitten 120, 126 angeordnet und in dem Durchtrittsraum 116 aufgenommen ist.

Auf Grund der sehr guten thermischen Isolierung der dargestellten Wanddurchführung 110 werden an der Außenwand 114e die Temperaturen auf ausreichend niedrige Maximaltemperaturen begrenzt, so dass unmittelbar an die Außenfläche 114e angrenzend brennbares Material, wie beispielsweise ein Holzbalken 135, angeordnet werden kann. Dies gilt für den gesamten Umfang, d.h. für die gesamte Mantelfläche der Wanddurchführung 110, von welcher die Außenfläche 114e einen Abschnitt bildet.

Die Abmessung der Wanddurchführung 110 in axialer Richtung entspricht im Wesentlichen der Dicke der Decke 132.

In Fig. 4 ist eine weitere Wanddurchführung 210 als Dachdurchführung ausgestaltet. Wie schon die Decken- bzw. Wanddurchführung 110 ist die Dachdurchführung 210 einwandig ausgeführt. Die Dachdurchführung 210 entspricht im Wesentlichen der Deckendurchführung 110, jedoch schließen die Deckelplatte 222 und die Verbindungsplatte 218 einen Winkel β ein, d.h. sie sind relativ zueinander geneigt angeordnet. Ebenso trifft die Durchführungsachse D unter einem Winkel γ auf die Verbindungsplatte 218, welcher von 90° verschieden ist. Dadurch kann die Deckendurchführung 210 an die Dachschräge angepasst in das Dach bündig eingesetzt werden.

Die Deckelplatte 222 ist dagegen parallel zur Fundamentfläche des Gebäudes angeordnet und ragt über die Dachaußenseite 136 hervor. Dadurch kann vermieden werden, dass Regenwasser, welches die Dachfläche 136 hinabläuft, in den Luftspalt 228 hineinfließt und diesen allmählich füllt. Der Außenmantel der Wanddurchführung 210, zu welchem die Außenseite 214e der zweiten Einfassung 214 gehört, kann optisch einem Kamin ähnlich gestaltet sein. Beispielsweise kann der Außenmantel mit einer Klinkermaueroptik versehen sein, die von außen den Eindruck eines gemauerten Kamins erweckt.

Zum Schutz vor Regenwasser kann die Wanddurchführung 210 durch einen Regenkragen 238 abgedeckt sein. Dieser verhindert, dass der Luftspalt 228 durch Niederschlag gefüllt oder in seiner Wirkung beeinträchtigt wird. Um die Hinterlüftungsfunktion sicherzustellen, kann der Regenkragen 238 mit Hinterlüftungsschlitzen 240 versehen sein.

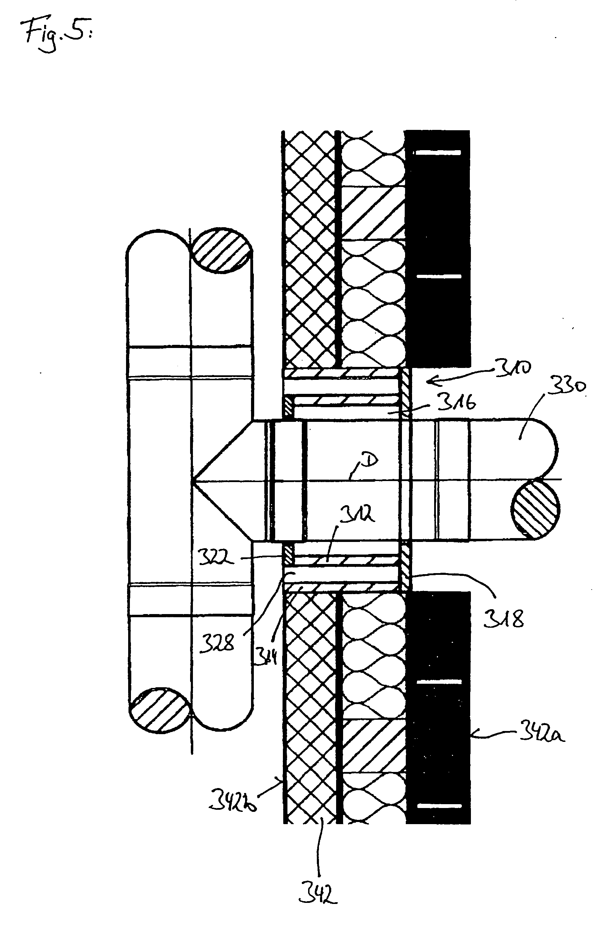

In Fig. 5 ist ein weiteres Einbaubeispiel einer erfindungsgemäßen Wanddurchführung gezeigt. Gleiche Bauteile wie in den Figuren 1 bis 3 sind in Fig. 5 mit gleichen Bezugszeichen versehen, jedoch erhöht um die Zahl 300.

Die in Fig. 5 gezeigte Wanddurchführung entspricht der Deckendurchführung 110, die in Fig. 4 gezeigt ist. Gleiche Bauteile wie bei der Deckendurchführung 110 sind daher in Fig. 5 mit gleichen Bezugszeichen versehen, jedoch erhöht um die Zahl 200. Ansonsten wird die Ausführungsform von Fig. 5 nur insofern beschrieben werden, als sie sich von der Deckendurchführung 110 der Fig. 4 und der Wanddurchführung 10 der Figuren 1 bis 3 unterscheidet.

Anstatt in einer horizontal verlaufenden Decke ist die Wanddurchführung 310 in einer im Wesentlichen vertikal verlaufenden Gebäudewand 342 vorgesehen. Das von der Verbindungsplatte 318 entfernt gelegene Längsende der Wanddurchführung 310 ist bündig mit der Außenfläche 342b der Gebäudewand 342 angeordnet. Die der Außenfläche 342b entgegensetzte Innenfläche 342a begrenzt ein Zimmer im Inneren des nicht weiter dargestellten Gebäudes von Fig. 5. Durch üblicherweise außen herrschende Luftbewegung (absolute Windstille ist gewöhnlich die Ausnahme) wird die Luft in dem Luftspalt 328 kontinuierlich ausgetauscht und so für eine Hinterlüftung der Einfassung 312 gesorgt.

Wie in Fig. 5 erkennbar ist, entspricht die gezeigte Einbausituation jener der Deckendurchführung 110 von Fig. 4. Sie ist lediglich um 90° gedreht.

In allen gezeigten Ausführungsbeispielen schließt die Verbindungsplatte 318 dichtend an die jeweilige Gebäudewand an, in welche die jeweilige Wanddurchführung eingesetzt ist. Dadurch sind die Gebäudewände, -decken und -dächer trotz der darin ausgebildeten Öffnungen zum Einbau der Wanddurchführung dann, wenn sie von dem Rohr durchsetzt sind, so dicht, dass sie einen "Blower-Door-Test" bestehen.

## Patentansprüche

1. Wanddurchführung zur thermisch isolierenden Durchführung eines Rohrs (30; 130; 230; 330), etwa Abgasrohrs, durch eine Gebäudewand (132; 342) längs einer Durchführungsachse (D), mit einer ersten Einfassung (12; 112; 212; 312) aus feuerfestem Material, welche sich längs der Durchführungsachse (D) erstreckt und einen Durchtrittsraum (116; 116; 216; 316) zur Aufnahme des Rohrs (30; 130; 230; 330) umgibt, und mit einer zweiten Einfassung (14; 114; 214; 314) aus feuerfestem Material, welche die erste Einfassung (12; 112; 212; 312) zumindest längs eines Abschnitts der Durchführungsachse (D) radial außen umgibt,
**dadurch gekennzeichnet, dass** radial zwischen der ersten (12; 112; 212; 312) und der zweiten Einfassung (14; 114; 214; 314) ein sowohl längs der Durchführungsachse (D) als auch in Umfangsrichtung um die Durchführungsachse (D) zumindest abschnittsweise sich erstreckender und in wenigstens einer axialen Richtung offener Luftspalt (28; 128; 228; 328) vorgesehen ist.

2. Wanddurchführung nach Anspruch 1,
**dadurch gekennzeichnet, dass** die erste (12; 112; 212; 312) und die zweite Einfassung (14; 114; 214; 314) koaxial angeordnet sind.

3. Wanddurchführung nach Anspruch 1 oder 2,
**dadurch gekennzeichnet, dass** der Luftspalt (28; 128; 228; 328) sich in axialer Richtung im Wesentlichen über die gesamte axiale Länge der Wanddurchführung (10) erstreckt.

4. Wanddurchführung nach einem der vorhergehenden Ansprüche,
**dadurch gekennzeichnet, dass** der Luftspalt (28; 128; 228; 328) ein in Umfangsrichtung geschlossener Ringspalt ist.

5. Wanddurchführung nach einem der vorhergehenden Ansprüche,
**dadurch gekennzeichnet, dass** die erste (12; 112; 212; 312) und die zweite Einfassung (14; 114; 214; 314) durch eine Verbindungsplatte (18; 118; 218; 318) miteinander verbunden sind, mit welcher die Durchführungsachse (D) einen Winkel (γ), vorzugsweise einen rechten Winkel, einschließt.

6. Wanddurchführung nach Anspruch 5,
**dadurch gekennzeichnet, dass** die Verbindungsplatte (18; 118; 218; 318) an einem axialen Längsende (12c; 14c) der ersten (12; 112; 212; 312) und der zweiten Einfassung (14; 114; 214; 314) vorgesehen ist.

7. Wanddurchführung nach einem der vorhergehenden Ansprüche,
**dadurch gekennzeichnet, dass** sie eine erste Deckelplatte (22; 122; 222; 322) aufweist, welche an einem axialen Längsende (12d) der ersten Einfassung (12; 112; 212; 312) angeordnet ist.

8. Wanddurchführung nach einem der vorhergehenden Ansprüche,
**dadurch gekennzeichnet, dass** sie eine zweite Deckelplatte (24) aufweist, welche an einem axialen Längsende (14c) der zweiten Einfassung (14) angeordnet ist.

9. Wanddurchführung nach Anspruch 7 oder 8,
**dadurch gekennzeichnet, dass** die Verbindungsplatte (18; 118; 218; 318) und die erste (22; 122; 222; 322) oder/und die zweite Deckelplatte (24; 124; 224; 324) eben sind.

10. Wanddurchführung nach Anspruch 9,
**dadurch gekennzeichnet, dass** die Verbindungsplatte (18; 118; 318) und die erste (22; 122; 322) oder/und die zweite Deckelplatte (24) parallel angeordnet sind.

11. Wanddurchführung nach Anspruch 9,
**dadurch gekennzeichnet, dass** die Verbindungsplatte (218) und die erste (222) oder/und die zweite Deckelplatte einen Winkel (β) zwischen sich einschließen.

12. Wanddurchführung nach einem der vorhergehenden Ansprüche,
**dadurch gekennzeichnet, dass** die erste (12; 112; 212; 312) oder/und die zweite Einfassung (14; 114; 214; 314) bei Betrachtung längs der Durchführungsachse (D) einen polygonalen, bevorzugt rechteckigen, besonders bevorzugt quadratischen Querschnitt aufweist.

## Claims

1. A wall bushing for the thermally insulated passage of a pipe (30;130;230;330), for instance a flue gas duct, through a building wall (132;342) along a bushing axis (D), with a first collar (12;112;212;312) which is made of fire-resistant material and which extends along the bushing axis (D) and surrounds a passage space (16;116;216;316) for accommodating the pipe (30;130;230;330), and with a second collar (14;114;214;314) which is made of fire-resistant material and which surrounds radially outwardly the first collar (12;112;212;312) at least along one portion of the bushing axis (D),
**characterised in that** an air gap (28;128;228;328), which extends at least in stages both along the bushing axis (D) and in a circumferential direction about the bushing axis (D) and which is open at least in an axial direction, is provided radially between the first collar (12;112;212;312) and the second collar (14;114;214;314).

2. A wall bushing according to Claim 1,
**characterised in that** the first collar (12;112;212;312) and the second collar (14;114;214;314) are arranged coaxially.

3. A wall bushing according to Claim 1 or 2,
**characterised in that** the air gap (28;128;228;328) extends in an axially direction substantially over the entire axial length of the wall bushing (10).

4. A wall bushing according to any one of the preceding Claims,
**characterised in that** the air gap (28;128;228;328) is an annular gap closed in the circumferential direction.

5. A wall bushing according to any one of the preceding Claims,
**characterised in that** the first collar (12;112;212;312) and the second collar (14;114;214;314) are connected to one another by a connecting plate (18;118;218;318), with which the bushing axis (D) forms an angle (γ), preferably a right angle.

6. A wall bushing according to Claim 5, **characterised in that** the connecting plate (18;118;218;318) is provided at an axial longitudinal end (12c;14c) of the first collar (12;112;212;312) and of the second collar (14;114;214;314).

7. A wall bushing according to any one of the preceding Claims,
**characterised in that** it has a first cover plate (22;122;222;322) which is arranged at an axial longitudinal end (12d) of the first collar (12;112;212;312).

8. A wall bushing according to any one of the preceding Claims,
**characterised in that** it has a second cover plate (24) which is arranged at an axial longitudinal end (14c) of the second collar (14).

9. A wall bushing according to Claim 7 or 8,
**characterised in that** the connecting plate (18;118;218;318) and the first cover plate (22;122;222;322) and/or the second cover plate (24;124;224;324) are flat.

10. A wall bushing according to Claim 9,
**characterised in that** the connecting plate (18;118;318) and the first cover plate (22;122;322) and/or the second cover plate (24) are arranged parallel.

11. A wall bushing according to Claim 9,
**characterised in that** the connecting plate (218) and the first cover plate (222) and/or the second cover plate form an angle (β) with one another.

12. A wall bushing according to any one of the preceding Claims,
**characterised in that**, when viewed along the bushing axis (D), the first collar (12;112;212;312) and/or the second collar (14;114;214; 314) have a polygonal, preferably rectangular, especially preferably square cross-section.

## Revendications

1. Passage de mur pour le passage thermo-isolant d'un tube (30 ; 130 ; 230 ; 330), par exemple d'un tube d'échappement, à travers un mur de bâtiment (132 ; 342) le long d'un axe de passage (D), avec un premier cadre (12; 112; 212 ; 312) en matériau ignifuge qui s'étend le long de l'axe de passage (D) et entoure un espace de passage (16 ; 116 ; 216 ; 316) pour la réception du tube (30 ; 130 ; 230 ; 330), et avec un deuxième cadre (14 ; 114 ; 214; 314) en matériau ignifuge qui entoure radialement à l'extérieur le premier cadre (12 ; 112 ; 212 ; 312) au moins le long d'une section de l'axe de passage (D),
**caractérisé en ce qu'**il est prévu radialement entre le premier (12 ; 112 ; 212 ; 312) et le deuxième cadre (14 ; 114 ; 214 ; 314), une fente d'air (28 ; 128 ; 228 ; 328) ouverte dans au moins une direction axiale et s'étendant au moins par section aussi bien le long de l'axe de passage (D) que dans le sens périphérique autour de l'axe de passage (D).

2. Passage de mur selon la revendication 1,
**caractérisé en ce que** le premier (12 ; 112 ; 212 ; 312) et le deuxième cadre (14 ; 114 ; 214 ; 314) sont agencés de manière coaxiale.

3. Passage de mur selon la revendication 1 ou 2,
**caractérisé en ce que** la fente d'air (28 ; 128 ; 228 ; 328) s'étend dans la direction axiale essentiellement sur toute la longueur axiale du passage de mur (10).

4. Passage de mur selon l'une quelconque des revendications précédentes,
**caractérisé en ce que** la fente d'air (28 ; 128 ; 228 ; 328) est une fente annulaire fermée dans le sens périphérique.

5. Passage de mur selon l'une quelconque des revendications précédentes,
**caractérisé en ce que** le premier (12 ; 112 ; 212 ; 312) et le deuxième cadre (14 ; 114 ; 214 ; 314) sont reliés l'un à l'autre par une plaque de raccordement (18 ; 118 ; 218 ; 318), avec laquelle l'axe de passage (D) forme en angle (γ), de préférence un angle droit.

6. Passage de mur selon la revendication 5,
**caractérisé en ce que** la plaque de raccordement (18 ; 118 ; 218 ; 318) est prévue à une extrémité longitudinale axiale (12c ; 14c) du premier (12 ; 112 ; 212 ; 312) et du deuxième cadre (14 ; 114 ; 214 ; 314).

7. Passage de mur selon l'une quelconque des revendications précédentes,
**caractérisé en ce qu'**il présente une première plaque couvercle (22 ; 122 ; 222 ; 322) qui est agencée à une extrémité longitudinale axiale (12d) du premier cadre (12 ; 112; 212; 312).

8. Passage de mur selon l'une quelconque des revendications précédentes,
**caractérisé en ce qu'**il présente une deuxième plaque couvercle (24) qui est agencée à une extrémité longitudinale axiale (14c) du deuxième cadre (14).

9. Passage de mur selon la revendication 7 ou 8,
**caractérisé en ce que** la plaque de raccordement (18 ; 118 ; 218 ; 318) et la première (22 ; 122 ; 222 ; 322) ou/et la deuxième plaque couvercle (24 ; 124 ; 224 ; 324) sont planes.

10. Passage de mur selon la revendication 9,
**caractérisé en ce que** la plaque de raccordement (18 ; 118 ; 318) et la première (22 ; 122 ; 322) ou/et la deuxième plaque couvercle (24) sont agencées en parallèle.

11. Passage de mur selon la revendication 9,
**caractérisé en ce que** la plaque de raccordement (218) et la première (222) ou/et la deuxième plaque couvercle forment un angle (β) entre elles.

12. Passage de mur selon l'une quelconque des revendications précédentes,
**caractérisé en ce que** le premier (12 ; 112 ; 212 ; 312) ou/et le deuxième cadre (14 ; 114 ; 214 ; 314) vu le long de l'axe de passage (D) présente une section transversale polygonale, de préférence rectangulaire, de manière particulièrement préférée carrée.
